# EUROPEAN PATENT APPLICATION

(11) **EP 4 300 693 A1**
(43) Date of publication of application: **03.01.2024**
(21) Application number: 22922541.2
(22) Date of filing: 16.05.2022
(51) Int. Cl.: H01M 50/342

(54) **END COVER, BATTERY CELL, BATTERY, AND ELECTRIC DEVICE**

(71) Applicant: Contemporary Amperex Technology Co., Limited, Ningde City, Fujian 352100 (CN)
(72) Inventor: ZHOU, Wenlin, Ningde, Fujian 352100 (CN); XU, Liangfan, Ningde, Fujian 352100 (CN); WU, Ningsheng, Ningde, Fujian 352100 (CN); LI, Quankun, Ningde, Fujian 352100 (CN); WANG, Peng, Ningde, Fujian 352100 (CN)
(74) Representative: Behr, Wolfgang
(86) International application number: PCT/CN2022/093137
(87) International publication number: WO 2023/220887

(57) **Abstract**

Embodiments of the present application provide an end cap, a battery cell, a battery and a power consuming device, which relate to the technical field of batteries. The end cap includes a cap body and a pressure relief groove. The pressure relief groove is provided in the cap body, and the pressure relief groove defines a pressure relief zone. A length direction of the pressure relief zone is consistent with a width direction of the cap body. A length direction of the pressure relief zone is consistent with a width direction of the cap body. The end cap has a stress concentration region at a short edge of the pressure relief groove when the inner side of the end cap is subjected to the pressure inside the battery cell, and the end cap has a stress concentration region at a long edge of the pressure relief groove when the outer side of the end cap is subjected to an impact force, so that the stress concentration regions of the end cap are inconsistent under two different working conditions, increasing the impact resistance of the end cap and prolonging the service life of the battery cell.

## Description

### Technical Field

The present application relates to the technical field of batteries, and in particular to an end cap, a battery cell, a battery and a power consuming device.

### Background Art

With the development of new energy technologies, the application of batteries is becoming more and more extensive. For example, the batteries are widely used in mobile phones, notebook computers, electric mopeds, electric vehicles, electric aircrafts, electric ships, electric toy cars, electric toy ships, electric toy aircrafts, electric tools, etc.

As an energy storage element, a battery cell generally outputs electric energy through a chemical reaction between an electrode assembly and an electrolyte. In the battery cell, the impact resistance of an end cap directly affects the service life of the battery cell. Therefore, how to improve the impact resistance of the end cap is an urgent problem to be solved in battery technology.

### Summary of the Invention

Embodiments of the present application provide an end cap, a battery cell, a battery and a power consuming device, which can effectively improve the impact resistance of the end cap.

In a first aspect, the embodiments of the present application provide an end cap, comprising a cap body and a pressure relief groove. The pressure relief groove is provided in the cap body, and the pressure relief groove defines a pressure relief zone. A length direction of the pressure relief zone is consistent with a width direction of the cap body.

In the above technical solution, the length direction of the pressure relief zone is consistent with the width direction of the cap body, the end cap has a stress concentration region at a short edge of the pressure relief groove when the inner side of the end cap is subjected to the pressure inside the battery cell, and the end cap has a stress concentration region at a long edge of the pressure relief groove when the outer side of the end cap is subjected to an impact force, so that the stress concentration regions of the end cap are inconsistent under two different working conditions, increasing the impact resistance of the end cap and prolonging the service life of the battery cell.

In some embodiments, in the width direction of the cap body, the ratio of a distance from the pressure relief groove to the edge of the cap body to a width of the cap body is 0.05-0.3. By setting the ratio of the distance from the pressure relief groove to the edge of the cap body in the width direction of the cap body to the width of the cap body within a rational range, not only can the risk of a decrease in the explosion pressure of the end cap be reduced, which is caused by the occurrence of stress concentration in the pressure relief zone near the edge of the cap body due to the too small distance from the pressure relief groove to the edge of the cap body, but the risk of affecting the pressure relief efficiency of the end cap can also be reduced, which is caused by the small size of the pressure relief zone in the width direction of the cap body due to the too large distance from the pressure relief groove to the edge of the cap body.

In some embodiments, in the width direction of the cap body, the ratio of the distance from the pressure relief groove to the edge of the cap body to the width of the cap body is 0.1-0.25. In this way, the risk of stress concentration in the pressure relief zone near the edge of the cap body in the width direction of the cap body is further reduced, and the pressure relief efficiency of the end cap is ensured.

In some embodiments, in the width direction of the cap body, distances from the pressure relief groove to two opposite edges of the cap body are the same. In this way, the pressure relief groove is arranged centrally in the width direction of the cap body, so that the pressure relief zone is easily opened in a timely manner for pressure relief when the battery cell is subjected to thermal runaway.

In some embodiments, the cap body partially protrudes in a thickness direction of the cap body to form a protrusion, and there is a distance between the protrusion and an edge of the cap body in the width direction of the cap body; wherein the pressure relief groove is provided in the protrusion. The cap body partially protrudes in the thickness direction of the cap body to form the protrusion, and a corresponding recessed space will be formed on the side of the cap body opposite to the protrusion in the thickness direction, so that the components inside the battery cell can be received, facilitating the increase of the energy density of the battery cell, and the bending strength of the end cap can also be increased and the impact resistance of the end cap be improved. In addition, since the pressure relief groove is provided in the protrusion, the pressure relief zone is easily opened in a timely manner for pressure relief when the battery cell is subjected to thermal runaway.

In some embodiments, in the width direction of the cap body, the ratio of the distance from the protrusion to the edge of the cap body to the width of the cap body is 0.005-0.25. By setting the ratio of the distance from the protrusion to the edge of the cap body in the width direction of the cap body to the width of the cap body within a rational range, it is ensured that there is a distance between the protrusion and the edge of the cap body in the width direction of the cap body, facilitating the fixing of the end cap. Of course, the distance between the protrusion and the edge of the cap body in the width direction of the cap body would not be too large, so that the protrusion has a relatively large size in the width direction of the cap body, and a large-size pressure relief groove can be arranged in the cap body, ensuring the pressure relief efficiency of the end cap.

In some embodiments, in the width direction of the cap body, distances from the protrusion to two opposite edges of the cap body are the same. In this way, the protrusion is arranged centrally in the width direction of the cap body, so that the bending strength of the end cap can be further increased.

In some embodiments, a recess is provided at the end of the protrusion protruding from the cap body, and the pressure relief groove is provided in a bottom face of the recess. The difficulty of forming the pressure relief groove can be effectively reduced.

In some embodiments, in the width direction of the cap body, the difference between a distance from the pressure relief groove to the edge of the cap body and a distance from the recess to the edge of the cap body is 1-10 mm. In this way, there is a certain distance between the pressure relief groove and a side wall of the recess in the width direction of the cap body, so that the manufacturing difficulty of the pressure relief groove is reduced. Of course, the distance between the pressure relief groove and the side wall of the recess in the width direction of the cap body would not be too large, so that the pressure relief zone has a relatively large size in the width direction of the cap body, improving the pressure relief efficiency of the end cap.

In some embodiments, the pressure relief groove is a closed groove extending along a closed trajectory. In this way, after the pressure relief zone is opened, the cap body can form a relatively large opening portion at a position corresponding to the pressure relief zone, thereby improving the pressure relief efficiency.

In some embodiments, the pressure relief groove comprises a first groove section, a second groove section, a third groove section and a fourth groove section connected end to end in sequence; in a length direction of the cap body, the first groove section is arranged opposite the third groove section, and the maximum distance between the first groove section and the third groove section is a first distance; and in the width direction of the cap body, the second groove section is arranged opposite the fourth groove section, and the minimum distance between the second groove section and the fourth groove section is a second distance; wherein the second distance is greater than the first distance. The pressure relief zone defined by the pressure relief groove of such a structure has a relatively large pressure relief area, and the structure is simple and easy to form and manufacture.

In some embodiments, the second groove section and the fourth groove section are arc-shaped grooves; and/or the first groove section and the third groove section are linear grooves extending in the width direction of the cap body. The second groove section and the fourth groove section are arc-shaped grooves, and the cap body has weak positions formed at the middle of the second groove section and at the middle of the fourth groove section. The weak positions are the positions of the pressure relief zone that are first opened, so that the pressure relief zone can be opened in a timely manner when the inside of the battery cell reaches the explosion pressure. The first groove section and the third groove section are both linear grooves extending in the width direction of the cap body, so that the first groove section and the third groove section are arranged in parallel to each other, and the cap body can be opened more easily along the first groove section and the third groove section after being split along the second groove section and the fourth groove section, increasing the opening rate of the pressure relief zone, and realizing rapid pressure relief.

In some embodiments, in the length direction of the cap body, distances from the pressure relief groove to two opposite edges of the cap body are the same. In this way, the pressure relief groove is arranged centrally in the length direction of the cap body, so that the pressure relief zone is easily opened in a timely manner for pressure relief when the battery cell is subjected to thermal runaway.

In a second aspect, the embodiments of the present application provide a battery cell, comprising a housing, an electrode assembly, and an end cap provided in any one of the embodiments in the first aspect. The housing is provided with an opening; the electrode assembly is received in the housing; and the end cap closes the opening.

In a third aspect, the embodiments of the present application provide a battery, comprising a case and a battery cell provided in any one of the embodiments in the second aspect, wherein the battery cell is received in the case.

In some embodiments, the case has a bottom wall, and the end cap is arranged on the side of the battery cell facing the bottom wall.

In a fourth aspect, the embodiments of the present application further provide a power consuming device, comprising a battery provided in any one of the embodiments of the third aspect.

### Brief Description of the Drawings

In order to more clearly describe the technical solutions of the embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any creative effort.
FIG. 1 is a schematic structural diagram of a vehicle provided in some embodiments of the present application;
FIG. 2 is an exploded view of a battery provided in some embodiments of the present application;
FIG. 3 is an exploded view of a battery cell according to some embodiments of the present application;
FIG. 4 is an isometric view of end cap shown in FIG. 3;
FIG. 5 is a top view of the end cap shown in FIG. 4; and
FIG. 6 is a partial enlarged view of part A of the end cap shown in FIG. 5.

List of reference signs: 10 - Case; 11 - First part; 12 - Second part; 20 - Battery cell; 21 - Housing; 22 - Electrode assembly; 221 - Positive tab; 222 - Negative tab; 23 - End cap; 231 - Cap body; 2311 - Protrusion; 232 - Pressure relief groove; 2321 - First groove section; 2322 - Second groove section; 2323 - Third groove section; 2324 - Fourth groove section; 233 - Pressure relief zone; 234 - Recess; 24 - Electrode terminal; 24a - Positive electrode terminal; 24b - Negative electrode terminal; 25 - Current collecting member; 100 - Battery; 200 - Controller; 300 - Motor; 1000 - Vehicle; X - Length direction of cap body; Y - Width direction of cap body; Z - Thickness direction of cap body.

### Detailed Description of Embodiments

In order to make the objectives, technical solutions and advantages of the embodiments of the present application clearer, the technical solutions in the embodiments of the present application will be described clearly below with reference to the drawings in the embodiments of the present application. Obviously, the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs; The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skills in the art, the specific meaning of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

"A plurality of' appearing in the present application means two or more (including two).

In the present application, a battery cell may include a lithium-ion secondary battery, a lithium-ion primary battery, a lithium-sulfur battery, a sodium/lithium-ion battery, a sodium-ion battery or a magnesium-ion battery, etc., which is not limited by the embodiments of the present application. The battery cell may be cylindrical, flat, cuboid or in another shape, which will also not be limited in the embodiments of the present application. The battery cells are generally classified into three types depending on the way of package: cylindrical battery cells, prismatic battery cells and pouch battery cells, which also will not be limited in the embodiments of the present application.

A battery mentioned in the embodiments of the present application refers to a single physical module comprising one or more battery cells to provide a high voltage and capacity. For example, the battery mentioned in the present application may include a battery module, a battery pack, etc. The battery generally comprises a case for packaging one or more battery cells. The case can prevent liquid or other foreign matters from affecting charging or discharging of a battery cell.

The battery cell comprises an electrode assembly and an electrolyte. The electrode assembly is composed of a positive electrode plate, a negative electrode plate and a separator. The battery cell operates mainly by relying on movements of metal ions between the positive electrode plate and the negative electrode plate. The positive electrode plate comprises a positive electrode current collector and a positive electrode active material layer. A surface of the positive electrode current collector is coated with the positive electrode active material layer, the positive electrode current collector not coated with the positive electrode active material layer protrudes from the positive electrode current collector coated with the positive electrode active material layer, and the positive electrode current collector not coated with the positive electrode active material layer serves as a positive tab. Taking a lithium-ion battery as an example, the material of the positive electrode current collector may be aluminum, and the positive electrode active material may be lithium cobalt oxides, lithium iron phosphate, ternary lithium or lithium manganate, etc. The negative electrode plate comprises a negative electrode current collector and a negative electrode active material layer. A surface of the negative electrode current collector is coated with the negative electrode active material layer, the negative electrode current collector not coated with the negative electrode active material layer protrudes from the negative electrode current collector coated with the negative electrode active material layer, and the negative electrode current collector not coated with the negative electrode active material layer serves as a negative tab. The negative electrode current collector may be made of copper, and the negative electrode active material may be carbon, silicon, etc. In order to ensure that no fusing occurs when a large current passes, there are multiple positive tabs stacked together, and there are multiple negative tabs stacked together. The separator may be made of PP (polypropylene), PE (polyethylene), etc. In addition, the electrode assembly may be of a wound structure or a laminated structure, which will not be limited in the embodiments of the present application.

Design factors on many aspects need to be simultaneously considered for the development of the battery technology, such as energy density, cycling life, discharge capacity, charge-discharge rate, and other performance parameters. In addition, the safety of the battery needs to be taken into account.

For the battery cell, in order to ensure the safety of the battery cell, a pressure relief structure may be provided on the end cap of the battery cell. For example, a pressure relief groove is provided on the end cap, and the pressure relief groove defines a pressure relief zone. When the pressure inside the battery cell reaches an explosion pressure, the pressure relief zone is opened to release the pressure from the inside of the battery cell, to reduce the risk of explosion or fire of the battery cell.

The inventors have noticed that after the battery cell has been used for a period of time, when the pressure inside the battery cell has not reached the explosion pressure, the pressure relief zone of the end cap may also be opened abnormally.

The inventors have further found through researches that the pressure relief zone defined by the pressure relief groove of the end cap is generally of an elongated strip-shaped structure, and the length direction of the pressure relief zone is consistent with the length direction of the cap body. In an actual working environment, the pressure inside the battery cell will change with the change of the ambient temperature. When the temperature rises, the pressure inside the battery cell rises, and the end cap is under the action of the pressure inside the battery cell, so that the end cap has a stress concentration zone at a short edge of the pressure relief groove. Under the condition that the outer side of the battery cell is subjected to an impact force, the impact force acts on the outer side of the end cap, and the end cap still has a stress concentration zone at the short edge of the pressure relief groove. That is to say, whether the inner side of the end cap or the outer side of the end cap is subjected to a force, the stress concentration zone of the end cap is at the short edge of the pressure relief groove, and the end cap is likely to be damaged at the short edge of the pressure relief groove, resulting in insufficient impact resistance of the end cap. When the pressure inside the battery cell changes alternately with the temperature for a long time and the battery cell is subjected to external impact for a long time, the end cap is prone to fatigue at the short edge of the pressure relief groove, resulting in that the end cap is split at the short edge of the pressure relief groove, and the pressure relief zone of the end cap is abnormally opened, affecting the service life of the battery cell.

In view of this, the embodiments of the application provide an end cap, comprising a cap body and a pressure relief groove. The pressure relief groove is provided in the cap body, and the pressure relief groove defines a pressure relief zone. A length direction of pressure relief zone is consistent with a width direction of the cap body.

In such an end cap, the length direction of the pressure relief zone is consistent with the width direction of the cap body, the end cap has a stress concentration region at a short edge of the pressure relief groove when the inner side of the end cap is subjected to the pressure inside the battery cell, and the end cap has a stress concentration region at a long edge of the pressure relief groove when the outer side of the end cap is subjected to an impact force, so that the stress concentration regions of the end cap are inconsistent under two different working conditions, increasing the impact resistance of the end cap and prolonging the service life of the battery cell.

The end cap described in the embodiments of the present application is applicable to a battery cell, a battery and a power consuming device using the battery.

The power consuming device may be a vehicle, a mobile phone, a portable device, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling electric tool, and a railway electric tool, such as an electric drill, an electric grinder, an electric wrench, an electric screwdriver, an electric hammer, an electric impact drill, a concrete vibrator, and an electric planer. The power consuming devices mentioned above are not specially limited in the embodiments of the present application.

For ease of description, an example in which the power consuming device refers to a vehicle is used for description in the following embodiments.

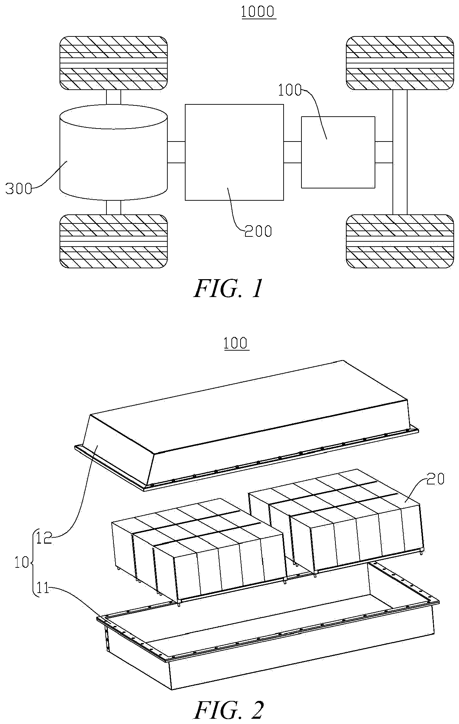

Referring to FIG. 1, FIG. 1 is a schematic structural diagram of a vehicle 1000 according to some embodiments of the present application. A battery 100 is provided inside the vehicle 1000, and the battery 100 may be provided at the bottom, the front or the back of the vehicle 1000. The battery 100 may be configured to supply power to the vehicle 1000. For example, the battery 100 may be used as a power supply for operating the vehicle 1000.

The vehicle 1000 may further comprise a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but also serve as a power supply for driving the vehicle 1000, in place of or partially in place of fuel or natural gas, to provide driving power for the vehicle 1000.

Referring to FIG. 2, FIG. 2 is an exploded view of a battery 100 provided in some embodiments of the present application. The battery 100 comprises a case 10 and a battery cell 20, and the case 10 is configured to receive the battery cell 20.

The case 10 herein is a component for receiving the battery cell 20, the case 10 provides a receiving space for the battery cell 20, and the case 10 may be of various structures. In some embodiments, the case 10 may comprise a first part 11 and a second part 12. The first part 11 and the second part 12 cover each other to define the receiving space for receiving the battery cell 20. The first part 11 and the second part 12 may have various shapes such as a cuboid and a cylinder. The first part 11 may be of a hollow structure with an open side, the second part 12 may also be of a hollow structure with an open side, and the open side of the second part 12 covers the open side of the first part 11, such that the case 10 having the receiving space is formed. Alternatively, the first part 11 is of a hollow structure with an open side, the second part 12 is of a plate-shaped structure, and the second part 12 covers the open side of the first part 11, such that the case 10 having the receiving space is formed. The first part 11 and the second part 12 may be sealed by means of a sealing element, which may be a sealing ring, a sealant, etc.

In the battery 100, one or more battery cells 20 may be provided. If a plurality of battery cells 20 are provided, the plurality of battery cells 20 may be connected in series, in parallel, or in series-parallel. The series-parallel connection refers that some of the plurality of battery cells 20 are connected in series and the rest are connected in parallel. It is possible that a plurality of battery cells 20 are first connected in series or in parallel or in series-parallel to form a battery module, and a plurality of battery modules are then connected in series or in parallel or in series-parallel connection to form a whole and are received in the case 10. It is also possible that all the battery cells 20 are directly connected in series, or in parallel, or in series-parallel, and the unit composed of all the battery cells 20 is then received in the case 10.

In some embodiments, the battery 100 may further comprise a busbar component, and the plurality of battery cells 20 may be electrically connected by means of the busbar component, so as to implement series connection, parallel connection, or series-parallel connection of the plurality of battery cells 20. The busbar component may be a metal conductor such as a copper conductor, an iron conductor, an aluminum conductor, a stainless steel conductor, and an aluminum alloy conductor.

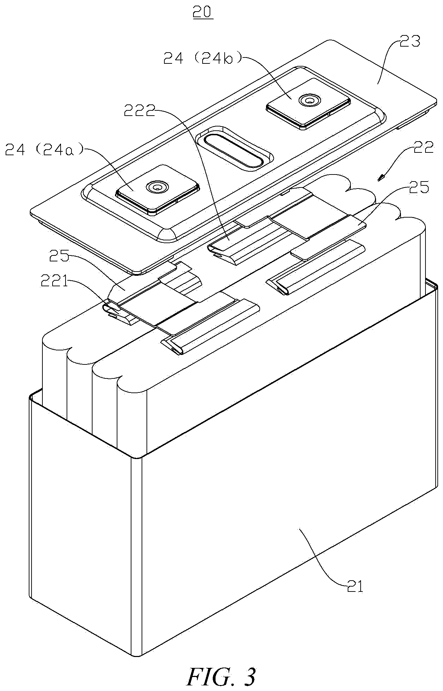

Referring to FIG. 3, FIG. 3 is an exploded view of the battery cell 20 provided in some embodiments of the present application. The battery cell 20 comprises a housing 21, an electrode assembly 22, an end cap 23, electrode terminals 24, and current collecting members 25.

The housing 21 is a component for receiving the electrode assembly 22, and the housing 21 may be of a hollow structure having an opening formed at one end, or the housing 21 may be of a hollow structure having openings formed at two opposite ends. The housing 21 may have various shapes such as a cylinder and a cuboid. The housing 21 may be made of various materials, such as copper, iron, aluminum, steel, and aluminum alloy.

The electrode assembly 22 is a component, where an electrochemical reaction occurs, in the battery cell 20. The electrode assembly 22 may comprise a positive electrode plate, a negative electrode plate, and a separator. The electrode assembly 22 may be of a winding structure formed by winding the positive electrode plate, the separator and the negative electrode plate, or a laminated structure formed by laminating the positive electrode plate, the separator and the negative electrode plate. The electrode assembly 22 is provided with a positive tab 221 and a negative tab 222. The positive tab 221 may be a part of the positive electrode plate that is not coated with the positive electrode active material layer, and the negative tab 222 may be a part of the negative electrode plate that is not coated with the negative electrode active material layer.

The end cap 23 is a component that closes an opening of the housing 21 to isolate an internal environment of the battery cell 20 from an external environment. The end cap 23 and the housing 21 together define a sealed space for receiving the electrode assembly 22, the electrolyte and other components. The end cap 23 may be shaped to adapt to the shape of the housing 21. For example, the housing 21 is of a cuboid structure, and the end cap 23 is of a rectangular structure adapted to the housing 21. The end cap 23 may also be made of various materials, such as copper, iron, aluminum, steel, and aluminum alloy. The end cap 23 may be fixed to the housing 21 by welding.

In the battery cell 20, there may be one or two end caps 23. If the housing 21 is of a hollow structure with an opening formed at one end, one end cap 23 may be provided correspondingly. If the housing 21 is of a hollow structure with openings formed at two ends, two end caps 23 may be provided correspondingly, and the two end caps 23 respectively close the two openings of the housing 21.

The electrode terminals 24 are components of the battery cell 20 that are connected to other components to output electric energy of the battery cell 20. The electrode terminals 24 are arranged on the end cap 23, and the electrode terminals 24 are configured to be respectively electrically connected to the positive tab 221 and the negative tab 222 of the electrode assembly 22. In the battery cell 20, two electrode terminals 24 may be provided. The two electrode terminals 24 are respectively a positive electrode terminal 24a and a negative electrode terminal 24b. The positive electrode terminal 24a is configured to be electrically connected to the positive tab 221, and the negative electrode terminal 24b is configured to be electrically connected to the negative tab 222. In an embodiment in which there are two end caps 23 in the battery cell 20, the positive electrode terminal 24a and the negative electrode terminal 24b may be arranged on the same end cap 23, or the positive electrode terminal 24a and the negative electrode terminal 24b may be respectively arranged on the two end caps 23. As shown in FIG. 3, in an embodiment where there is one end cap 23 in the battery cell 20, the positive electrode terminal 24a and the negative electrode terminal 24b may be arranged on the same end cap 23.

The current collecting members 25 are components for enabling the electrical connection between the tabs and the electrode terminals 24. As shown in FIG. 3, taking the example that one end cap 23 is provided in the battery cell 20, and the positive electrode terminal 24a and the negative electrode terminal 24b are both arranged on the end cap 23, the positive electrode terminal 24a may be connected to the positive tab 221 via one of the current collecting members 25, and the negative electrode terminal 24b may be connected to the negative tab 222 via the other current collecting member 25.

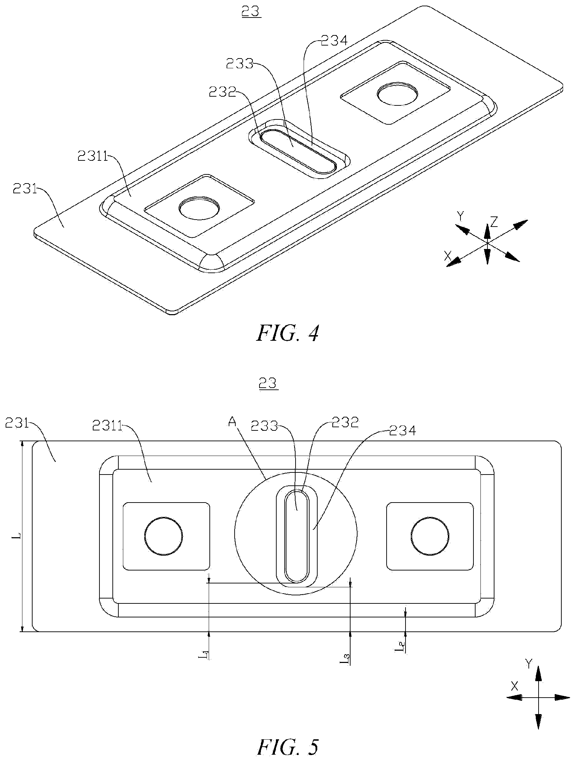

Referring to FIGS. 4 and 5, FIG. 4 is an isometric view of the end cap 23 shown in FIG. 3; and FIG. 5 is a top view of the end cap 23 shown in FIG. 4. The embodiments of the application provide an end cap 23. The end cap 23 comprises cap body 231 and a pressure relief groove 232. The pressure relief groove 232 is provided in the cap body 231, and the pressure relief groove 232 defines a pressure relief zone 233. A length direction of the pressure relief zone 233 is consistent with a width direction Y of the cap body.

The cap body 231 is configured to close the opening of the housing 21. The cap body 231 is in the shape of an elongated strip. It can be understood that the length of the cap body 231 is greater than the width of the cap body 231. Illustratively, the cap body 231 is rectangular.

The pressure relief groove 232 may be formed in a variety of ways, such as stamping and milling. The pressure relief groove 232 may be provided in the surface of the cap body 231 facing the inside of the housing 21, or may be provided in the surface of the cap body 231 facing away from the housing 21. Taking the cap body 231 of a rectangular flat plate structure as an example, the cap body 231 has opposite inner and outer surfaces in the thickness direction, the inner surface of the cap body 231 faces the inside of the housing 21, the outer surface of the cap body 231 is arranged facing away from the housing 21, and the pressure relief groove 232 may be provided in the inner surface of the cap body 231, or in the outer surface of the cap body 231.

The pressure relief zone 233 is the part of the cap body 231 defined by the pressure relief groove 232. When the pressure inside the battery cell 20 reaches the explosion pressure, the pressure relief zone 233 of the cap body 231 is opened to release the pressure from the inside of the battery cell 20. After the pressure relief zone 233 is opened, the cap body 231 may form an opening portion at a position corresponding to the pressure relief zone 233, and emissions inside the battery cell 20 may be discharged through the opening portion. The pressure relief zone 233 is in the shape of an elongated strip. It can be understood that the length of the pressure relief zone 233 is greater than the width of the pressure relief zone 233.

The pressure relief groove 232 may be a groove recessed from the surface of the cap body 231 in the thickness direction Z of the cap body, and the pressure relief zone 233 is the part of the cap body 231 defined by the inner side face of the groove. Taking a rectangular inner side face of the groove as an example, the pressure relief zone 233 is a rectangular part of the cap body 231 defined by the inner side face of the pressure relief groove 232. The pressure relief groove 232 may also be a linear groove extending along a bent trajectory. For example, the bent trajectory is a U-shaped trajectory, and the pressure relief zone 233 is a U-shaped part of the cap body 231 defined by the bent trajectory. For another example, the bent trajectory is a rectangular trajectory, and the pressure relief zone 233 is a rectangular part defined by the bent trajectory of the cap body 231. If the pressure relief groove 232 is a linear groove extending along the bent trajectory, when the pressure inside the battery cell 20 reaches the explosion pressure, the pressure relief zone 233 may be opened with the pressure relief groove 232 as the boundary to release the pressure from the inside of the battery cell 20.

The length direction of the pressure relief zone 233 is consistent with the width direction Y of the cap body. It can be understood that, the width direction of the pressure relief zone 233 is consistent with the length direction X of the cap body.

In the related art, the length direction of the pressure relief groove 232 is consistent with the length direction X of the cap body, so that when the inner side of the end cap 23 is subjected to the pressure inside the battery cell 20, since the size of the pressure relief groove 232 in the width direction is smaller than the size in the length direction, the end of the end cap 23 in the length direction of the pressure relief zone 233 (the position of the end cap 23 at the short edge of the pressure relief groove 232) is a stress concentration zone; and when the outer side of the end cap 23 is subjected to an impact force outside the battery cell 20, since the size of the cap body 231 in the width direction is smaller than the size in the length direction, the end of the pressure relief groove 232 in the length direction X of the cap body is more likely to be damaged, and the end of the end cap 23 in the length direction of the pressure relief zone 233 (the position of the end cap 23 at the short edge of the pressure relief groove 232) is a stress concentration zone. Therefore, whether the inner side of the end cap 23 or the outer side of the end cap 23 is subjected to a force, the stress concentration zone of the end cap 23 is at the short edge of the pressure relief groove 232, and the end cap 23 is likely to be damaged at the short edge of the pressure relief groove 232, resulting in insufficient impact resistance of the end cap 23.

In the embodiments of the present application, the length direction of the pressure relief zone 233 is consistent with the width direction Y of the cap body, so that when the inner side of the end cap 23 is subjected to the pressure inside the battery cell 20, the end cap 23 has a stress concentration region at the short edge of the pressure relief groove 232; and when the outer side of the end cap 23 is subjected to an impact force, the end of the pressure relief groove 232 in the length direction X of the cap body is more likely to be damaged, and the end cap 23 thus has a stress concentration region at the long edge of the pressure relief groove 232, so that the stress concentration regions of the end cap 23 are inconsistent under two different working conditions, increasing the impact resistance of the end cap 23 and prolonging the service life of the battery cell 20.

In some embodiments, in the width direction Y of the cap body, the ratio of the distance from the pressure relief groove 232 to the edge of the cap body 231 to the width of the cap body 231 is 0.05-0.3.

As shown in FIG. 5, in the width direction Y of the cap body, the distance from the pressure relief groove 232 to the edge of the cap body 231 is L₁, and the width of the cap body 231 is L, then 0.05 ≤ L₁/L ≤ 0.3.

In the width direction Y of the cap body, the pressure relief groove 232 has two opposite ends, and the cap body 231 has two opposite edges. It can be understood that, in the width direction Y of the cap body, the ratio of the distance from one end of the pressure relief groove 232 to an adjacent edge of the cap body 231 to the width of the cap body 231 is 0.05-0.3, and the ratio of the distance from the other end of the pressure relief groove 232 to the other edge of the cap body 231 to the width of the cap body 231 is also 0.05-0.3.

In the width direction Y of the cap body, if the distance from the pressure relief groove 232 to the edge of the cap body 231 is too small, the pressure relief groove 232 is likely to be affected by the edge of the cap body 231. For example, the cap body 231 is welded to the housing 21 at the edge, and this is likely to cause stress concentration in the pressure relief zone 233 near the edge of the cap body 231, reducing the explosion pressure of the end cap. In the width direction Y of the cap body, if the distance from the pressure relief groove 232 to the edge of the cap body 231 is too large, the size of the pressure relief zone 233 in the width direction Y of the cap body is relatively small, affecting the pressure relief efficiency of the end cap 23.

In this embodiment, by setting the ratio of the distance from the pressure relief groove 232 to the edge of the cap body 231 in the width direction Y of the cap body to the width of the cap body 231 within a rational range, not only can the risk of a decrease in the explosion pressure of the end cap 23 be reduced, which is caused by the occurrence of stress concentration in the pressure relief zone 233 near the edge of the cap body 231 due to the too small distance from the pressure relief groove 232 to the edge of the cap body 231, but the risk of affecting the pressure relief efficiency of the end cap 23 by the pressure relief zone 233 can also be reduced, which is caused by the small size of the pressure relief zone 233 in the width direction Y of the cap body due to the too large distance from the pressure relief groove 232 to the edge of the cap body 231.

In some embodiments, in the width direction Y of the cap body, the ratio of the distance from the pressure relief groove 232 to the edge of the cap body 231 to the width of the cap body 231 is 0.1-0.25.

It can be understood that 0.1 ≤ L₁/L ≤ 0.25.

In this embodiment, the risk of stress concentration in the pressure relief zone 233 near the edge of the cap body 231 in the width direction Y of the cap body is further reduced, and the pressure relief efficiency of the end cap 23 is ensured.

In some embodiments, in the width direction Y of the cap body, distances from the pressure relief groove 232 to two opposite edges of the cap body 231 are the same.

It can be understood that, in the width direction Y of the cap body, the distance from one end of the pressure relief groove 232 to an adjacent edge of the cap body 231 and the distance from the other end of the pressure relief groove 232 to the other edge of the cap body 231 are the same.

In this embodiment, the pressure relief groove 232 is arranged centrally in the width direction Y of the cap body, so that the pressure relief zone 233 is easily opened in a timely manner for pressure relief when the battery cell 20 is subjected to thermal runaway.

In some embodiments, still referring to FIGS. 4 and 5, the cap body 231 partially protrudes in the thickness direction Z of the cap body to form a protrusion 2311, and there is a distance between the protrusion 2311 and an edge of the cap body 231 in the width direction Y of the cap body. The pressure relief groove 232 is provided in the protrusion 2311.

The protrusion 2311 is the part of the cap body 231 partially protruding to the outer side of the cap body 231, and the outer side of the cap body 231 is the side of the cap body 231 facing away from the housing 21 after closing the opening of the housing 21. It can be understood that, in the thickness direction Z of the cap body, the cap body 231 partially protrudes in the direction away from the housing 21 to form a protrusion 2311. The protrusion 2311 on the cap body 231 may be formed in various ways. For example, the protrusion 2311 may be formed by stamping. When stamping the cap body 231, a recessed space is formed inside the cap body 231, and a protrusion 2311 is correspondingly formed on the outer side of the cap body 231.

The shape of the protrusion 2311 mat be identical with the shape of the cap body 231. For example, the cap body 231 and the protrusion 2311 are both rectangular, the length direction X of the cap body is the same as the length direction of the protrusion 2311, and the width direction of the cap body Y is the same as the width direction of the protrusion 2311. In an embodiment in which the electrode terminals 24 are arranged on the end cap 23, the electrode terminals 24 may be mounted on the protrusion 2311.

There is a distance between the protrusion 2311 and the edge of the cap body 231 in the width direction Y of the cap body. That is to say, in the width direction Y of the cap body, the protrusion 2311 has two opposite edges, the cap body 231 has two opposite edges, and the distance between the two edges of the protrusion 2311 is smaller than the distance between the two edges of the cap body 231, there is a distance between one of the edges of the protrusion 2311 and an adjacent edge of the cap body 231, and there is a distance between the other edge of the protrusion 2311 and the other edge of the cap body 231.

In this embodiment, the cap body 231 partially protrudes in the thickness direction Z of the cap body to form the protrusion 2311, and a corresponding recessed space will be formed on the side of the cap body 231 opposite to the protrusion 2311 in the thickness direction, so that the components, such as the tabs of the electrode assembly 22, inside the battery cell 20 can be received, facilitating the increase of the energy density of the battery cell 20, and the bending strength of the end cap 23 can also be increased and the impact resistance of the end cap 23 be improved. In addition, since the pressure relief groove 232 is provided in the protrusion 2311, the pressure relief zone 233 is easily opened in a timely manner for pressure relief when the battery cell 20 is subjected to thermal runaway.

In some embodiments, in the width direction Y of the cap body, the ratio of the distance from the protrusion 2311 to the edge of the cap body 231 to the width of the cap body 231 is 0.005-0.25.

As shown in FIG. 5, in the width direction Y of the cap body, the distance from the protrusion 2311 to the edge of the cap body 231 is L₂, then 0.005 ≤ L₂/L ≤ 0.25.

It can be understood that, in the width direction Y of the cap body, the ratio of the distance from one of the edges of the protrusion 2311 to an adjacent edge of the cap body 231 to the width of the cap body 231 is 0.005-0.25; and the ratio of the distance from the other edge of the protrusion 2311 to the other edge of the cap body 231 to the width of the cap body 231 is also 0.005-0.25.

In this embodiment, by setting the ratio of the distance from the protrusion 2311 to the edge of the cap body 231 in the width direction Y of the cap body to the width of the cap body 231 within a rational range, it is ensured that there is a distance between the protrusion 2311 and the edge of the cap body 231 in the width direction Y of the cap body, facilitating the fixing of the end cap 23, for example, the fixing of the end cap 23 to the housing 21 by welding. Of course, the distance between the protrusion 2311 and the edge of the cap body 231 in the width direction Y of the cap body would not be too large, so that the protrusion 2311 has a relatively large size in the width direction Y of the cap body, and a large-size pressure relief groove 232 can be arranged in the cap body 231, ensuring the pressure relief efficiency of the end cap 23.

In some embodiments, in the width direction Y of the cap body, distances from the protrusion 2311 to two opposite edges of the cap body 231 are the same.

It can be understood that, in the width direction Y of the cap body, the distance from one of the edges of the protrusion 2311 to an adjacent edge of the cap body 231 and the distance from the other edge of the protrusion 2311 to the other edge of the cap body 231 are the same.

In this embodiment, the protrusion 2311 is arranged centrally in the width direction Y of the cap body, so that the bending strength of the end cap 23 can be further increased.

In some embodiments, still referring to FIGS. 4 and 5, a recess 234 is provided at the end of the protrusion 2311 protruding from the cap body 231, and the pressure relief groove 232 is provided in a bottom face of the recess 234.

The end of the protrusion 2311 protruding from the cap body 231 is the end of the protrusion 2311 facing away from the housing 21. This end has an end face, from which the recess 234 is recessed in the thickness direction Z of the cap body, so that the recess 234 is recessed in a direction approaching the housing 21. The bottom face of the recess 234 is the surface of the recess 234 at the deepest position in the depth direction.

In this embodiment, the shape of the recess 234 is not particularly limited. Illustratively, in FIGS. 4 and 5, the recess 234 is rectangular, that is, the inner side wall of the recess 234 is rectangular. The length direction of the recess 234 is consistent with the length direction of the pressure relief groove 232, and the width direction of the recess 234 is consistent with the width direction of the pressure relief groove 232.

For the battery cell 20, in order to ensure that the pressure relief zone 233 of the end cap 23 can be normally opened for pressure relief when the internal pressure reaches the explosion pressure, the pressure relief groove 232 needs to meet a certain depth requirement. However, it is more difficult to directly machine the pressure relief groove 232 to a relatively deep position, and the end cap 23 may be subjected to too much pressure when the pressure relief groove 232 is machined, resulting in insufficient strength of the end cap 23.

Therefore, in this embodiment, by providing the protrusion 2311 with the recess 234, and providing the pressure relief groove 232 in the bottom face of recess 234, during forming, the recess 234 may be first machined from the protrusion 2311, and the pressure relief groove 232 is then machined in the bottom face of the recess 234, so that the difficulty of forming the pressure relief groove 232 can be effectively reduced, and the risk of insufficient strength is reduced, which is caused by a relatively large pressure on the end cap 23 due to the excessively deep machining of the pressure relief groove 232.

In some embodiments, in the width direction Y of the cap body, the difference between a distance from the pressure relief groove 232 to the edge of the cap body 231 and a distance from the recess 234 to the edge of the cap body 231 is 1-10 mm.

As shown in FIG. 5, in the width direction Y of the cap body, the distance from the recess 234 to the edge of the end cap 23 is L₃, then 1 mm ≤ L₁ - L₃ ≤ 10 mm.

In the width direction Y of the cap body, the recess 234 has two opposite ends, the pressure relief groove 232 has two opposite ends, and the cap body 231 has two opposite edges. It can be understood that, in the width direction Y of the cap body, the difference between the distance from one end of the pressure relief groove 232 to an adjacent edge of the cap body 231 and the distance from one end of the recess 234 to an adjacent edge of the cap body 231 is 1-10 mm, and the distance from the other end of the pressure relief groove 232 to the other edge of the cap body 231 and the distance from the other end of the recess 234 to the other edge of the cap body 231 are also 1-10 mm. That is to say, the distance from one end of the pressure relief groove 232 to the adjacent end of the recess 234 is 1-10 mm, and the distance from the other end of the pressure relief groove 232 to the other end of the recess 234 is also 1-10 mm.

In this embodiment, by setting the difference between the distance from the pressure relief groove 232 to the edge of the cap body 231 and the distance from the recess 234 to the edge of the cap body 231 within a rational range, there is a distance between the pressure relief groove 232 and a side wall of the recess 234 in the width direction Y of the cap body, reducing the manufacturing difficulty of the pressure relief groove 232. Of course, on the other hand, the distance between the pressure relief groove 232 and the side wall of the recess 234 in the width direction Y of the cap body would not be too large, so that the pressure relief zone 233 has a relatively large size in the width direction Y of the cap body, improving the pressure relief efficiency of the end cap 23.

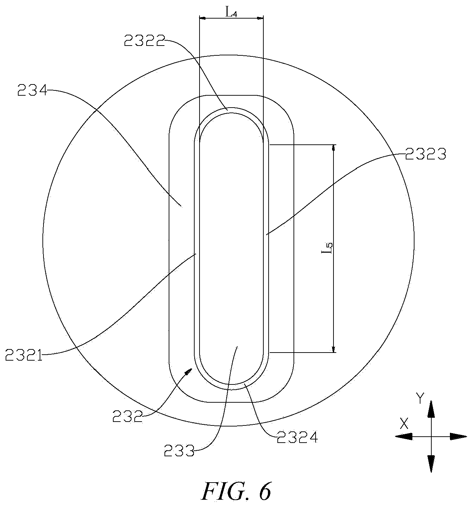

In some embodiments, referring to FIG. 6, FIG. 6 is a partial enlarged view of the end cap 23 shown in FIG. 5. The pressure relief groove 232 is a closed groove extending along a closed trajectory.

By closed trajectory is meant a trajectory whose head and tail ends are connected to each other, such as a rectangular trajectory and an elliptical trajectory. Taking the example that the pressure relief groove 232 is formed by milling, the cap body 231 may be machined along a closed trajectory to form the pressure relief groove 232.

In this embodiment, the pressure relief groove 232 is a closed groove. After the pressure relief zone 233 is opened, the cap body 231 can form a relatively large opening portion at a position corresponding to the pressure relief zone 233, thereby improving the pressure relief efficiency.

In some embodiments, still referring to FIG. 6, the pressure relief groove 232 comprises a first groove section 2321, a second groove section 2322, a third groove section 2323 and a fourth groove section 2324 connected end to end in sequence. In the length direction X of the cap body, the first groove section 2321 is arranged opposite the third groove section 2323, and the maximum distance between the first groove section 2321 and the third groove section 2323 is a first distance L₄. In the width direction Y of the cap body, the second groove section 2322 is arranged opposite the fourth groove section 2324, and the minimum distance between the second groove section 2322 and the fourth groove section 2324 is a second distance L₅. The second distance L₅ is greater than the first distance L₄.

The first groove section 2321, the second groove section 2322, the third groove section 2323 and the fourth groove section 2324 are groove sections of the pressure relief groove 232 respectively located in four different orientations. In this embodiment, there is no special limitation on the shapes of the first groove section 2321, the second groove section 2322, the third groove section 2323 and the fourth groove section 2324. For example, the first groove section 2321, the second groove section 2322, the third groove section 2323 and the fourth groove section 2324 may be linear grooves or arc-shaped grooves. If the first groove section 2321, the second groove section 2322, the third groove section 2323 and the fourth groove section 2324 are linear grooves, the first groove section 2321 and the third groove section 2323 may or may not be in parallel to each other, and the second groove section 2322 and fourth groove section 2324 may or may not be in parallel to each other.

In the length direction X of the cap body, the maximum distance (first distance L₄) between the first groove section 2321 and the third groove section 2323 is the width of the pressure relief zone 233. Of course, if the first groove section 2321 and the second groove section 2322 are arranged in parallel to each other, the maximum distance and the minimum distance between the first groove section 2321 and the second groove section 2322 are the same.

In the width direction Y of the cap body, the maximum distance between the second groove section 2322 and the fourth groove section 2324 is the length of the pressure relief zone 233. Of course, if the second groove section 2322 and the fourth groove section 2324 are arranged in parallel to each other, the maximum distance and the minimum distance between the second groove section 2322 and the fourth groove section 2324 are the same.

The second groove section 2322 and the fourth groove section 2324 are the short edges of the pressure relief groove 232, and the first groove section 2321 and the third groove section 2323 are the long edges of the pressure relief groove 232. When the inner side of the end cap 23 is subjected to the pressure inside the battery cell 20, the end cap 23 has stress concentration regions at the short edges of in the pressure relief groove 232, that is, the end cap 23 has stress concentration regions at the second groove section 2322 and the fourth groove section 2324. When the outer side of the end cap 23 is subjected to an impact force, the end cap 23 has stress concentration regions at the long edges of in the pressure relief groove 232, that is, the end cap 23 has stress concentration regions at the first groove section 2321 and the third groove section 2323.

In this embodiment, the pressure relief zone 233 defined by the pressure relief groove 232 has a relatively large pressure relief area, and the structure is simple and easy to form and manufacture.

In some embodiments, still referring to FIG. 6, the second groove section 2322 and the fourth groove section 2324 are arc-shaped grooves; and/or the first groove section 2321 and the third groove section 2323 are linear grooves extending in the width direction Y of the cap body.

The second groove section 2322 and the fourth groove section 2324 may be bent in the same direction, or in opposite directions. The second groove section 2322 and the fourth groove section 2324 may be bent in directions toward each other, and the center of the second groove section 2322 and the center of the fourth groove section 2324 are located outside the pressure relief zone 233; or the second groove section 2322 and the fourth groove section 2324 may be bent in directions away from each other, and the center of the second groove section 2322 and the center of the fourth groove section 2324 are located inside the pressure relief zone 233.

Illustratively, in FIG. 6, the second groove section 2322 and the fourth groove section 2324 are bent in the directions away from each other, the first groove section 2321 and the third groove section 2323 are linear grooves extending in the width direction Y of the cap body, the first groove section 2321 and the third groove section 2323 are both tangent to the second groove section 2322, and the first groove section 2321 and the third groove section 2323 are both tangent to the fourth groove section 2324. In the width direction Y of the cap body, the distance from the middle of the second groove section 2322 to the middle of the fourth groove section 2324 is the maximum distance between the second groove section 2322 and the fourth groove section 2324, and the length of the first groove section 2321 is the minimum distance (second distance L₅) between the second groove section 2322 and the fourth groove section 2324.

In this embodiment, the second groove section 2322 and the fourth groove section 2324 are arc-shaped grooves, and the cap body 231 has weak positions formed at the middle of the second groove section 2322 and at the middle of the fourth groove section 2324. The weak positions are the positions of the pressure relief zone 233 that are first opened, so that the pressure relief zone 233 can be opened in a timely manner when the inside of the battery cell 20 reaches the explosion pressure. The first groove section 2321 and the third groove section 2323 are both linear grooves extending in the width direction Y of the cap body, so that the first groove section 2321 and the third groove section 2323 are arranged in parallel to each other, and the cap body 231 can be opened more easily along the first groove section 2321 and the third groove section 2323 after being split along the second groove section 2322 and the fourth groove section 2324, increasing the opening rate of the pressure relief zone 233, and realizing rapid pressure relief.

In some embodiments, in the length direction X of the cap body, distances from the pressure relief groove 232 to two opposite edges of the cap body 231 are the same.

It can be understood that, in the length direction X of the cap body, the distance from one end of the pressure relief groove 232 to an adjacent edge of the cap body 231 is equal to the distance from the other end of the pressure relief groove 232 to the other edge of the cap body 231. Taking the example that the first groove section 2321 and the third groove section 2323 are linear grooves extending in the width direction Y of the cap body, in the length direction X of the cap body, the distance from the first groove section 2321 to an adjacent edge of the cap body 231 is equal to the distance from the third groove section 2323 to the other edge of the cap body 231.

In this embodiment, the pressure relief groove 232 is arranged centrally in the length direction X of the cap body, so that the pressure relief zone 233 is easily opened in a timely manner for pressure relief when the battery cell 20 is subjected to thermal runaway.

The embodiments of the present application provide a battery cell 20, comprising a housing 21, an electrode assembly 22, and an end cap 23 provided in any one of the embodiments described above. The housing 21 is provided with an opening. The electrode assembly 22 is received inside the housing 21. The end cap 23 closes the opening.

The embodiments of the present application provide a battery 100, comprising a case 10 and a battery cell 20 provided in any one of the embodiments described above. The battery cell 20 is received in the case 10.

In some embodiments, the case 10 has a bottom wall, and the end cap 23 is arranged on the side of the battery cell 20 facing the bottom wall.

The bottom wall is the wall at the bottom of the case 10 in normal use. Take the example that the case 10 comprises a first part 11 and a second part 12, in normal use, the second part 12 covers the top of the first part 11, and the wall of the first part 11 facing away from the second part 12 is the bottom wall.

The end cap 23 is arranged on the side of the battery cell 20 facing the bottom wall, so that the battery cell 20 is in an upside-down state.

The embodiments of the present application further provide a power consuming device, comprising the battery 100 provided in any one of the embodiments described above.

It should be noted that the embodiments in the present application and features in the embodiments may be combined with each other without conflicts.

The above embodiments are only used to explain the technical solutions of the present application, and are not intended to limit the present application, and various modifications and changes of the present application may be made by those skilled in the art. Any modifications, equivalent substitutions, improvements, and the like made within the spirit and principle of the present application should fall within the scope of protection of the present application.

## Claims

1. An end cap, comprising:
a cap body; and
a pressure relief groove provided in the cap body, the pressure relief groove defining a pressure relief zone;
wherein a length direction of the pressure relief zone is consistent with a width direction of the cap body.

2. The end cap according to claim 1, wherein in the width direction of the cap body, the ratio of a distance from the pressure relief groove to an edge of the cap body to a width of the cap body is 0.05-0.3.

3. The end cap according to claim 2, wherein in the width direction of the cap body, the ratio of the distance from the pressure relief groove to the edge of the cap body to the width of the cap body is 0.1-0.25.

4. The end cap according to any one of claims 1-3, wherein in the width direction of the cap body, distances from the pressure relief groove to two opposite edges of the cap body are the same.

5. The end cap according to claim 1, wherein the cap body partially protrudes in a thickness direction of the cap body to form a protrusion, and there is a distance between the protrusion and an edge of the cap body in the width direction of the cap body;
wherein the pressure relief groove is provided in the protrusion.

6. The end cap according to claim 5, wherein in the width direction of the cap body, the ratio of the distance from the protrusion to the edge of the cap body to the width of the cap body is 0.005-0.25.

7. The end cap according to claim 5 or 6, wherein in the width direction of the cap body, distances from the protrusion to two opposite edges of the cap body are the same.

8. The end cap according to any one of claims 5-7, wherein a recess is provided at the end of the protrusion protruding from the cap body, and the pressure relief groove is provided in a bottom face of the recess.

9. The end cap according to claim 8, wherein in the width direction of the cap body, the difference between a distance from the pressure relief groove to the edge of the cap body and a distance from the recess to the edge of the cap body is 1-10 mm.

10. The end cap according to any one of claims 1-9, wherein the pressure relief groove is a closed groove extending along a closed trajectory.

11. The end cap according to claim 10, wherein the pressure relief groove comprises a first groove section, a second groove section, a third groove section and a fourth groove section connected end to end in sequence;
in a length direction of the cap body, the first groove section is arranged opposite the third groove section, and the maximum distance between the first groove section and the third groove section is a first distance; and
in the width direction of the cap body, the second groove section is arranged opposite the fourth groove section, and the minimum distance between the second groove section and the fourth groove section is a second distance;
wherein the second distance is greater than the first distance.

12. The end cap according to claim 11, wherein the second groove section and the fourth groove section are arc-shaped grooves; and/or
the first groove section and the third groove section are linear grooves extending in the width direction of the cap body.

13. The end cap according to any one of claims 1-12, wherein in the length direction of the cap body, distances from the pressure relief groove to two opposite edges of the cap body are the same.

14. A battery cell, comprising:
a housing provided with an opening;
an electrode assembly received in the housing; and
an end cap of any one of claims 1-13, wherein the end cap closes the opening.

15. A battery, comprising:
a case; and
a battery cell of claim 14, wherein the battery cell is received in the case.

16. The battery according to claim 15, wherein the case has a bottom wall, and the end cap is arranged on the side of the battery cell facing the bottom wall.

17. A power consuming device, comprising a battery of claim 15 or 16.
